# FASCICULE DE BREVET EUROPEEN

(11) **EP 0 702 468 B1**
(45) Date de publication et mention de la délivrance du brevet: **28.11.2001**
(21) Numéro de dépôt: 95410100.2
(22) Date de dépôt: 08.09.1995
(51) Int. Cl.: H04L 7/027, H04L 27/00

(54) **Dispositif d'identification d'une séquence de synchronisation**
Einrichtung zur Erkennung einer Synchronisierungsfolge
Apparatus for the identification of a synchronisation sequence

(30) Priorité: 14.09.1994 FR 9411210
(43) Date de publication de la demande: 20.03.1996
(73) Titulaire: STMicroelectronics S.A., 94250 Gentilly (FR)
(72) Inventeur: Glass, William, F-38170 Seyssinet Pariset (FR)
(74) Mandataire: de Beaumont, Michel

(56) Documents cités:
- EP-A- 0 534 885
- US-A- 5 337 332

## Description

La présente invention concerne le domaine des modulateurs/démodulateurs (modems) numériques et plus particulièrement l'opération d'identification de séquences prédeterminées de mots de consigne lors de phases de mise en route, ou de phases intermédiaires d'apprentissage durant une même communication. L'invention s'applique plus particulièrement à des modems utilisés pour la transmission de télécopies.

Dans un modem utilisant un processeur de signal, les données à transmettre sont codées sous forme numérique, à partir d'un certain nombre de symboles possibles, puis transmises sous forme d'échantillons de portions d'une porteuse modulée, par exemple, en phase et en amplitude, puis convertis en signal analogique.

Les phases d'apprentissage de communication entre deux modems sont destinées à adapter ces modems, essentiellement, en fonction de la ligne de transmission qui entraîne des variations dans les signaux transmis que le modem récepteur doit être capable d'identifier comme telles afin de décoder les données.

Ces variations peuvent se traduire, par exemple, par un décalage de la fréquence porteuse, une distorsion d'amplitude du signal modulé, du bruit, une atténuation du signal, une gigue de phase, un décalage temporel des symboles modulés, etc.

Pour des transmissions au moyen de modems fonctionnant en mode bidirectionnel à l'alternat (semi-duplex), les échanges d'informations (données ou consignes) s'effectuent alternativement, un modem étant en émission tandis que l'autre est en réception et inversement. Lorsque ces changements de sens de transmission sont fréquents au cours d'une même communication, il est important que les phases d'apprentissage soient les plus courtes possibles pour ne pas nuire à la cadence de transmission des données.

Les variations dues à la ligne ne changent que légèrement pour un modem donné entre deux périodes de réception séparées par une période d'émission. Ce modem peut donc mémoriser les paramètres correspondants aux variations analysées lors de la période précédente où il était en réception. Ces paramètres sont les coefficients de l'égaliseur adaptatif, la fréquence de décalage pour le rétablissement de la porteuse, le décalage fréquentiel de rétablissement temporel, le gain, etc.

Une courte phase d'apprentissage peut donc être utilisée, entre chaque période d'émission de données, pour réadapter les modems en fonction des variations éventuellement intervenues depuis la phase d'apprentissage précédente.

De telles phases d'apprentissage que l'on recherche les plus courtes possibles sont présentes dans les échanges entre deux modems utilisés pour la transmission de télécopies. De tels modems fonctionnent en mode bidirectionnel à l'alternat et sont susceptibles d'émettre et de recevoir des signaux en modulation de phase et d'amplitude (QAM) ou en modulation différentielle de phase (DPH) d'une porteuse pour la transmission des données.

Avant chaque transmission de document, une phase d'apprentissage initial est effectuée et, avant chaque transmission d'une page de document, une phase d'apprentissage intermédiaire est effectuée. Les recommandations CCITT prévoient une procédure d'apprentissage déterminée pour chaque norme de transmission en fixant le type de signaux devant être transmis et la durée maximale des procédures d'apprentissage. Dans le cas de la norme V27 ter, par exemple, qui correspond à une des normes utilisées pour la télécopie en modulation QAM, une procédure d'apprentissage se divise en cinq segments.

Ces cinq segments correspondent à une émission particulière, par le modem appelant, de signaux prédéterminés qui doivent être reconnus et utilisés par le modem appelé pour adapter ses différents modules et les rendre aptes à recevoir correctement des données. Le modem qui reçoit des signaux correspondant à ces segments doit pouvoir les reconnaître à temps pour entamer les différentes adaptations nécessaires à son fonctionnement.

Un premier segment consiste en une porteuse pure (dépourvue de modulation) émise à la fréquence de la porteuse de transmission de données. Cette fréquence est, par exemple, de 1800 Hz pour la norme V27 ter et la durée de ce segment est fixée de 185 à 200 ms.

Un deuxième segment consiste en une absence d'émission pendant une certaine durée. Cette durée est, par exemple, de 20 à 25 ms pour la norme V27 ter.

Les deux premiers segments ne sont présents que dans des phases d'apprentissage relatives à des modems pourvus de modules d'élimination d'écho.

Un troisième segment consiste en une émission d'un signal modulé par une fréquence donnée, en phase et en opposition de phase. Cette fréquence est, par exemple, de 1600 Ez pour la norme V27 ter. Ce troisième segment est fondamental. Il sert à ajuster une commande automatique de gain et un module de rétablissement temporel pour rétablir la fréquence et la phase du symbole transmis. Il est essentiel que le modem qui le reçoit identifie ce troisième segment pour pouvoir pendant la période suivante recevoir correctement les données transmises. La durée de ce troisième segment dépend de l'option dans laquelle se trouvent les modems parmi deux options qui correspondent, respectivement, à un apprentissage initial ou à un apprentissage intermédiaire. Pour la norme V27 ter, l'option d'apprentissage intermédiaire, dite option a, a une durée de 14 intervalles de symboles. L'option d'apprentissage initial, dite option b, a une durée de 50 intervalles de symboles. Les durées sont exprimées en nombres d'intervalles de symboles, ou bauds, car elles dépendent du débit en bits par seconde de la transmission, la norme V27 ter prévoyant deux vitesses de transmission (1200 bauds, ou 240C bits/s, et 1600 bauds, ou 4800 bits/s).

Un quatrième segment consiste en une émission d'un signal embrouillé aléatoire dans une plage de fréquences. Pour la norme V27 ter à 4800 bits/s, cette plage de fréquences est comprise entre 1000 et 2600 Hz. Sa durée est de 58 intervalles de symboles pour l'option a et de 1074 intervalles de symbcles pour l'option b. Ce segment quatre sert à régler un égaliseur pour compenser l'atténuation et le temps de propagation de groupe lié à la ligne de transmission et au rétablissement de la porteuse.

Un cinquième segment consiste en une émission d'un signal embrouillé, encodé de manière prédéterminée. La durée de ce segment est de 8 intervalles de symboles. Ce segment cinq sert à synchroniser un désembrouilleur pour une réception correcte des données.

L'invention concerne l'identification du troisième segment qui consiste, pour la norme V27 ter à 4800 Bits/s, en une porteuse de 1800 Hz modulée par une fréquence de 1600 Hz en phase et en opposition de phase. Dans le domaine fréquentiel, cela correspond à émettre deux fréquences pures, l'une à 1000 Hz, l'autre à 2600 Hz.

Le choix de ce segment trois pour identifier l'apparition d'une phase d'apprentissage est motivé par le fait que les deux premiers segments ne sont pas toujours présents. En effet, ils ne sont présents que dans des phases d'apprentissage relatives à des modems pourvus de modules d'élimination d'écho. Par ailleurs, c'est à partir du segment trois que les premières adaptations des algorithmes du récepteur sont effectuées, ce qui interdit le choix des segments ultérieurs.

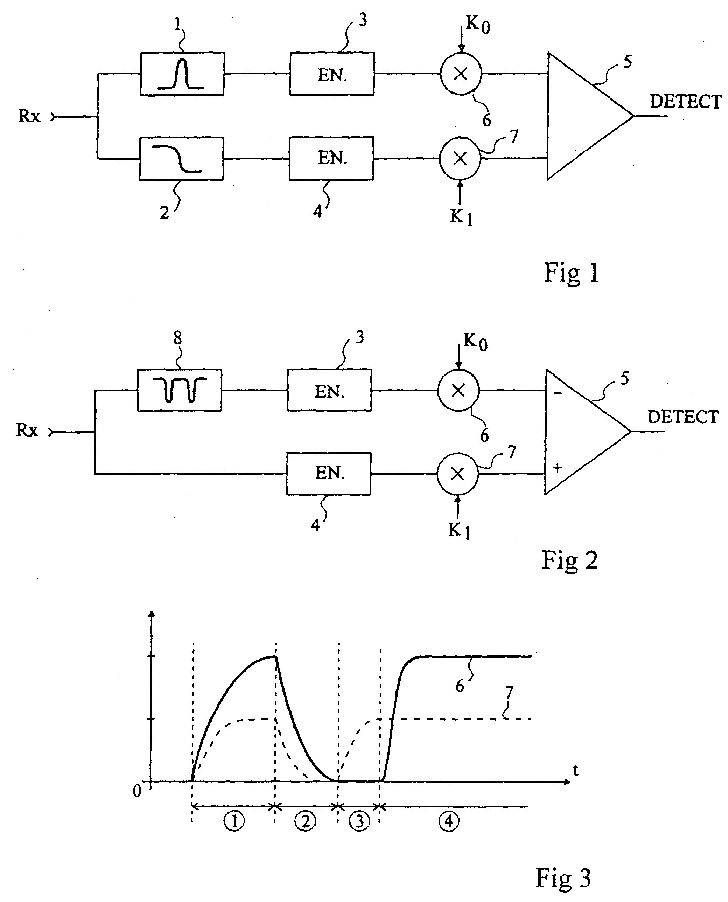

La figure 1 représente un circuit classiquement utilisé pour la détection de ce segment trois. Ce circuit comporte un filtre passe-bande 1 et un filtre passe-bas 2 recevant, chacun, le signal Rx émis par le modem émetteur. Le signal Rx que reçoivent les filtres 1 et 2 correspond, en fait, au signal reçu par le modem récepteur, après numérisation dans un convertisseur analogique/numérique (non représenté). Chaque filtre 1 ou 2 est suivi d'un calculateur de niveau, respectivement 3 et 4. Un comparateur 5 reçoit, sur une première entrée, la sortie d un multiplieur 6 multipliant la sortie du calculateur 3 par un coefficient K0 et, sur une seconde entrée, la sortie d'un multiplieur 7 multipliant la sortie du calculateur 4 par un coefficient K1. La sortie du comparateur 5 fournit un signal DETECT à deux états indiquant la présence ou l'absence du segment trois dans le signal reçu Rx. Le coefficient K0 du multiplieur 6 est approximativement le double du coefficient K1 du multiplieur 7. Pour la norme V27 ter, le filtre passe-bande 1 est un filtre étroit centré sur la fréquence de 1000 Hz et le filtre passe-bas 2 possède une fréquence de coupure de 1760 Hz.

Ainsi, lorsque le segment trois est présent c'est-à-dire deux fréquences pures de 1000 Hz et 2600 Hz, la première entrée du comparateur 5 est à un niveau supérieur à sa seconde entrée. En effet, le double du niveau de sortie du filtre passe-bande 1 est supérieur au niveau de sortie du filtre passe-bas 2.

En présence d'un signal modulé (spectre plat entre 1000 Hz et 2600 Hz), de bruit sur la ligne ou d'un autre segment trois correspondant à une autre norme de transmission (par exemple, un segment trois de la norme V29 qui correspond à deux fréquences pures de 500 Hz et 2900 Hz), le niveau de sortie du filtre passe-bas 2 est supérieur au double du niveau de sortie du filtre passe-bande 1 en raison de l'étroitesse de ce dernier.

Si ce type de détecteur fonctionne correctement pour un segment trois de longue durée (par exemple, option b ce la norme V27 ter qui correspond à 50 bauds, soit 31,25 ms), il ne permet pas de détecter de manière fiable le segment trois si celui-ci n'est émis que pendant une courte durée (par exemple, option a de la norme V27 ter qui correspond à 14 bauds, soit 8,75 ms). Cela est dû au temps de réponse du filtre passe-bande 1 dont la constante de temps est supérieure à 14 bauds en raison de son étroitesse.

De fait, un filtre passe-bande numérique est classiquement un filtre récursif au moins du deuxième ordre constitué à partir d'intégrateurs, de multiplieurs et d éléments de retard (registres à décalages). La structure et le comportement d'un filtre de ce type ont été décrits par P.-M. BEAUFILS et M. RAMI dans l'ouvrage "Le filtrage numérique", pages 216 à 224.

Un inconvénient de ce type de filtre est que l'obtention d'un filtre passe-bande étroit qui est nécessaire pour ne pas entraîner de fausses détections de segment trois, conduit à un filtre lent.

Une autre méthode, classiquement utilisée pour détecter le segment trois, consiste à évaluer l'énergie du signal reçu dans une large bande de fréquence (par exemple de 300 Hz à 3200 Hz) et à considérer le segment 3 comme reçu lorsqu'un seuil prédéterminé d'énergie est atteint. Un inconvénient de cette méthode est qu'on observe des déclenchements intempestifs à l'apparition d'autres signaux d'amplitude suffisante apportée, par exemple, par du bruit.

Une autre méthode connue (décrite dans le document US-A-5 337 332) consiste à détecter la séquence d apprentissage en examinant le signal en bande de base démodulé. Un inconvénient d'une telle méthode est qu'elle requiert un démodulateur et une commande automatique de gain supplémentaires pour obtenir le signal en bande de base. Or, le segment trois est précisément utilisé pour ajuster la commande automatique de gain. Un autre inconvénient d'une telle méthode est qu'elle n'autorise pas le partage de moyens de calcul avec d'autres circuits d'un modem classique.

Le document EP-A-0 534 885 décrit un système de détection automatique de la vitesse de transmission pour des modems full-duplex prévoyant des filtres passe-bandes en amont d'un démodulateur pour éliminer des besoins de synchronisation entre modem émetteur et récepteur avant d'effectuer une détection d'un signal d'identification.

L'invention vise à pallier ces inconvénients en proposant un détecteur de segment trois qui soit à la fois fiable et suffisamment rapide, même dans le cas d'une émission de segment trois de courte durée.

L'invention vise également à proposer un détecteur de segment trois qui réduit le nombre de composants par rapport à un détecteur classique tel que représenté à la figure 1.

L'invention vise également à proposer un tel détecteur qui permette un partage de certains moyens de calcul avec d'autres circuits du modem.

Pour atteindre ces objets, la présente invention prévoit un dispositif d'identification d'une séquence prédéterminée de signaux modulés arrivant sur un modem, cette séquence possédant un spectre fréquentiel de deux fréquences déterminées, comportant :
un comparateur fournissant un signal indicateur de la présence ou l'absence de ladite séquence,
un filtre coupe-bandes recevant lesdits signaux modulés,
un premier calculateur d'amplitude en série avec le filtre coupe-bandes et dont une sortie est reliée à une première entrée du comparateur, et
un second calculateur d'amplitude dont l'entrée reçoit, directement, les signaux modulés reçus par le modem et dont la sortie est reliée à une seconde entrée du comparateur.

Selon un mode de réalisation de la présente invention, un multiplieur, effectuant une multiplication par un coefficient prédéterminé, est intercalé entre chaque sortie de calculateur d'amplitude et l'entrée du comparateur à laquelle le calculateur est associé.

Selon un mode de réalisation de la présente invention, le coefficient du multiplieur associé au premier calculateur est supérieur au coefficient du multiplieur associé au second calculateur.

Selon un mode de réalisation de la présente invention, le filtre coupe-bandes est un filtre numérique non récursif à deux fréquences de coupure.

Selon un mode de réalisation de la présente invention, le filtre coupe-bandes est un filtre du quatrième ordre à deux zéros.

Selon un mode de réalisation de la présente invention, chaque calculateur d'amplitude comprend un circuit de détermination de la valeur absolue de l'amplitude du signal reçu et, constituant un moyenneur, un filtre numérique passe-bas récursif du premier ordre à fréquence de coupure nulle.

Selon un mode de réalisation de la présente invention, la fréquence de la porteuse est de 1800 Hz, les fréquences de coupure du filtre coupe-bandes étant, respectivement, 1000 Hz et 2600 Hz.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 décrite précédemment est destinée à exposer l'état de la technique et le problème posé ;
la figure 2 représente un mode de réalisation d'un dispositif d'identification selon l'invention ; et
la figure 3 représente, sous forme de chronogrammes, la forme des signaux les plus significatifs du dispositif selon l'invention.

Comme le montre la figure 2, le dispositif de reconnaissance selon l'invention comporte un filtre coupe-bandes 8 sur lequel est envoyé le signal Rx reçu par le modem après numérisation. La sortie de ce filtre coupe-bandes 8 est envoyée sur un premier calculateur d'amplitude 3 dont la sortie est reliée à une première entrée d'un comparateur 5. Le signal reçu Rx est également envoyé, directement, sur un second calculateur d'amplitude 4 dont la sortie est reliée à une seconde entrée du comparateur 5. De préférence, un multiplieur, respectivement 6 et 7, est intercalé entre la sortie de chaque calculateur 3 et 4 et l'entrée du comparateur à laquelle il est associé. Ces multiplieurs 6 et 7 affectent chaque sortie de calculateur 3 ou 4 d'un coefficient positif et inférieur à l'unité, respectivement K0 et K1, K0 étant supérieur à K1.

Les calculateurs d'amplitude 3 et 4 sont constitués d'un circuit de détermination de la valeur absolue de l'amplitude du signal reçu Rx et d'un filtre numérique passe-bas récursif du premier ordre à fréquence de coupure nulle constituant un moyenneur. Selon l'invention, on préfère utiliser un calculateur d'amplitude qui présente l'avantage d'être d'une mise en oeuvre plus facile qu'un calculateur d'énergie élevant au carré le niveau du signal reçu.

Le filtre coupe-bandes 8 comporte deux fréquences de coupure qui correspondent aux deux fréquences présentes dans le segment trois, soit pour la norme V27 ter, 1000 Hz et 2600 Hz.

Un avantage de l'emploi d'un tel filtre coupe-bandes 8 est qu'il est aisément réalisable sous la forme d'un filtre numérique non récursif possédant une faible constante de temps. Cela n'est pas le cas d'un filtre passe-bande dans la mesure où un filtre non récursif ne comporte que des zéros (fréquences pour lesquelles l'atténuation est infinie). Il faudrait donc multiplier le nombre d'éléments de retard du filtre pour entourer la fréquence centrale d'une multitude de zéros (fréquences coupées) dans la mesure où l'on cherche à obtenir une fréquence non coupée déterminée, ce qui conduirait à un temps de propagation très élevé du signal dans le filtre. Par contre, pour un filtre coupe-bandes, les fréquences déterminées sont précisément des fréquences coupées, donc des zéros.

Au moyen d'un dispositif tel que représenté à la figure 2, la présence du segment trois entraîne un niveau élevé en sortie du calculateur 4 qui reçoit le signal Rx en direct, et un très faible niveau en sortie du calculateur 3 dans la mesure où les deux fréquences ont été coupées par le filtre 8. Le bruit susceptible d'être mélangé au signal reçu Rx est ici sans incidence dans la mesure où sa contribution est pratiquement la même sur les deux calculateurs 3 et 4 car les filtres coupe-bandes sont relativement étroits.

En l'absence du segment trois, c'est-à-dire en présence d'un signal modulé, de bruit ou d'un segment trois d'une autre norme de transmission, les sorties des deux calculateurs 3 et 4 sont sensiblement aux mêmes niveaux.

Les coefficients des multiplieurs 6 et 7 sont, de préférence, choisis pour que le niveau de sortie du calculateur 4 soit divisé par deux par rapport au niveau de sortie du calculateur 3. Cela permet de différencier aisément les deux cas possibles au niveau du comparateur 5, une des deux entrées du comparateur (la première en l'absence du segment trois, la seconde en présence du segment trois) ayant alors toujours un niveau supérieur à l'autre.

Le dispositif selon l'invention permet ainsi une détection fiable et rapide de l'apparition du segment trcis dans une phase d'apprentissage. La constante de temps du dispositif selon l'invention correspond à la constante de temps du filtre coupe-bandes 8 majorée de la constante de temps des calculateurs 3 et 4.

A titre d'exemple, un filtre coupe-bandes 8 non récursif du quatrième ordre permet une bonne précision du filtre tout en autorisant une détection du segment trois même dans le cas de l'option a de la norme V27 ter.

La figure 3 illustre, sous forme de chronogrammes, le fonctionnement du dispositif selon l'invention. Elle représente les niveaux d'entrées du comparateur 5, c'est-à-dire les niveaux de sortie des multiplieurs 6 et 7 qui représentent les niveaux de sortie des calculateurs 3 et 4 affectés des coefficients multiplicateurs K0 et K1.

Les différents segments ont été indiqués en abscisse par des chiffres entourés.

Comme on peut le constater, le segment trois est parfaitement identifiable en comparant la sortie du filtre coupe-bandes 8 par rapport au signal reçu Rx. Sur la figure 3, on voit clairement que, pendant la présence du segment trois, le niveau de sortie du calculateur 3 (affecté du coefficient K0) est inférieur au niveau de sortie du calculateur 4 (affecté du coefficient K1) alors que c'est l'inverse dans tous les autres segments.

Pendant le segment un, s'il existe dans la phase d'apprentissage, le signal reçu Rx est une porteuse pure, par exemple, à la fréquence de 1800 Hz. Ainsi, cette fréquence n'est pas coupée par le filtre 8 et les niveaux de sorties des calculateurs 3 et 4 sont identiques. La multiplication de ces niveaux par les coefficients, respectivement K0 et K1, conduit à ce que le niveau de la première entrée du comparateur 5 est supérieur au niveau de sa seconde entrée.

Pendant le segment deux, s'il existe dans la phase d'apprentissage, aucun signal n'est émis. En conséquence les niveaux de sortie des calculateurs 3 et 4 sont encore identiques. Ce qui reste vrai même en présence de bruit dans la mesure où la contribution de ce bruit sera sensiblement la même sur les deux niveaux délivrés par les calculateurs 3 et 4.

Pendant le segment trois, le signal reçu Rx correspond à deux fréquences pures, par exemple, de 1000 et 2600 Hz. Ces fréquences étant coupées par le filtre 8, le niveau de sortie du calculateur 3 devient nul, au niveau de bruit près, tan dis que le niveau de sortie du calculateur 4 correspond au niveau total du signal Rx. Ainsi le niveau de la première entrée du comparateur 5 sera inférieur au niveau de sa seconde entrée. La contribution du bruit éventuel est toujours sensiblement la même sur les deux niveaux d'amplitude.

Pendant les segments quatre et cinq, le signal reçu Rx est un signal embrouillé. Ainsi, les niveaux de sorties des calculateurs 3 et 4 seront sensiblement les mêmes. La multiplication de ces niveaux par les coefficients, respectivement K0 et K1, conduit, comme pour les segments un et deux, à ce que le niveau de la première entrée du comparateur 5 est supérieur au niveau de sa seconde entrée.

Un avantage de la présente invention est qu'elle utilise le signal reçu Rx avant démodulation. L'invention ne requiert ainsi pas de circuit supplémentaire (démodulateur, etc.). De plus, la détection du segment trois est effectuée le plus en amont possible, c'est-à-dire en sortie du convertisseur analogique/numérique.

Un autre avantage de la présente invention est qu'elle permet que le calculateur 4 soit partagé avec d'autres circuits du modem utilisant, à d'autres fins, un calculateur d'amplitude du signal Rx avant démodulation, par exemple, un détecteur de perte de porteuse.

Un autre avantage de la présente invention, également lié au fait qu'elle utilise le signal reçu avant démodulation, est qu'elle délivre (en sortie du calculateur 3) une information supplémentaire sur le niveau d'amplitude durant le segment trois. Une telle information peut servir, par exemple, à des tests sur le niveau de réception du segment trois qui est d'amplitude calibrée.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, alors que certaines des explications précédentes ont été données par soucis de clarté en utilisant un vocabulaire qui correspond parfois à un fonctionnement analogique, il sera clair pour l'homme du métier que tous les éléments du circuit selon la présente invention traitent des signaux numériques et que les constituants du circuit illustrés sous forme matérielle pourront correspondre en pratique à des réalisations logicielles.

## Revendications

1. Dispositif d'identification d'une séquence prédéterminée de signaux modulés arrivant sur un modem, cette séquence possédant un spectre fréquentiel de deux fréquences déterminées, **caractérisé en ce qu'**il comporte :
un comparateur (5) fournissant un signal indicateur de la présence ou l'absence de ladite séquence,
un filtre coupe-bandes (8) recevant lesdits signaux modulés,
un premier calculateur d'amplitude (3) en série avec le filtre coupe-bandes (8) et dont une sortie est reliée à une première entrée du comparateur (5), et
un second calculateur d'amplitude (4) dont l'entrée reçoit, directement, les signaux modulés reçus (Rx) par le modem et dont la sortie est reliée à une seconde entrée du comparateur (5).

2. Dispositif d'identification d'une séquence prédéterminée de signaux selon la revendication 1, **caractérisé en ce qu'**un multiplieur (6, 7), effectuant une multiplication par un coefficient prédéterminé (K0, K1), est intercalé entre chaque sortie de calculateur d'amplitude (3, 4) et l'entrée du comparateur (5) à laquelle le calculateur (3, 4) est associé.

3. Dispositif d'identification d'une séquence prédéterminée de signaux selon la revendication 2, **caractérisé en ce que** le coefficient (K0) du multiplieur (6) associé au premier calculateur (3) est supérieur au coefficient (K1) du multiplieur (7) associé au second calculateur (4).

4. Dispositif d'identification d'une séquence prédéterminée de signaux selon l'une quelconque des revendications 1 à 3, **caractérisé en ce que** le filtre coupe-bandes (8) est un filtre numérique non récursif à deux fréquences de coupure.

5. Dispositif d'identification d'une séquence prédéterminée de signaux selon la revendication 4, **caractérisé en ce que** le filtre coupe-bandes (8) est un filtre du quatrième ordre à deux zéros.

6. Dispositif d'identification d'une séquence prédéterminée de signaux selon l'une quelconque des revendications 1 à 5, **caractérisé en ce que** chaque calculateur d'amplitude (3, 4) comprend un circuit de détermination de la valeur absolue de l'amplitude du signal reçu (Rx) et, constituant un moyenneur, un filtre numérique passe-bas récursif du premier ordre à fréquence de coupure nulle.

7. Dispositif d'identification d'une séquence prédéterminée de signaux selon l'une quelconque des revendications 1 à 6, **caractérisé en ce que** la fréquence de la porteuse des signaux modulés est de 1800 Hz, les fréquences ce coupure du filtre coupe-bandes (8) étant, respectivement, 1000 Hz et 2600 Hz.

## Claims

1. A device for identifying a predetermined sequence of modulated signals arriving on a modem, said sequence having a frequency spectrum of two determined frequencies, **characterized in that** it comprises:
- a comparator (5) providing a signal indicative of the presence or the absence of said sequence,
- a notch filter (8) receiving said modulated signals,
- a first magnitude calculation circuit (3) serially connected to the notch filter (8), an output of which is connected with a first input of the comparator (5), and
- a second magnitude calculation circuit (4), the input of which directly receives the modulated signals (Rx) received by the modem, and the output of which is connected to a second input of the comparator (5).

2. A device for identifying a predetermined sequence of signals according to claim 1, **characterized in that** a multiplier (6, 7), multiplying by a predetermined coefficient (K0, K1), is interposed between each output of a magnitude calculation circuit (3, 4) and the input of the comparator (5) with which the calculation circuit (3, 4) is associated.

3. A device for identifying a predetermined sequence of signals according to claim 2, **characterized in that** the coefficient (K0) of the multiplier (6) associated with the first calculation circuit (3) is greater than the coefficient (K1) of the multiplier (7) associated with the second calculation circuit (4).

4. A device for identifying a predetermined sequence of signals according to any of claims 1 to 3, **characterized in that** the notch filter (8) is a non-recursive digital filter with two cut-off frequencies.

5. A device for identifying a predetermined sequence of signals according to claim 4, **characterized in that** the notch filter (8) is a fourth order filter with two zeros.

6. A device for identifying a predetermined sequence of signals according to any of claims 1 to 5, **characterized in that** each magnitude calculation circuit (3, 4) comprises a circuit for determining the absolute value of the magnitude of the receive signal (Rx) and a digital recursive first order low-pass filter with a zero cut-off frequency, forming an averaging block.

7. A device for identifying a predetermined sequence of signals according to any of claims 1 to 6, **characterized in that** the carrier frequency of the modulated signals is 1800 Hz, and wherein the cut-off frequencies of the notch filter (8) are respectively 1000 Hz and 2600 Hz.

## Patentansprüche

1. Vorrichtung zur Identifizierung einer an einem Modem ankommenden vorbestimmten Sequenz modulierter Signale, wobei diese Sequenz ein Frequenzspektrum von zwei bestimmten Frequenzen besitzt,
**dadurch gekennzeichnet, daß** die Vorrichtung umfaßt:
einen Komparator (5) zur Bildung eines Signals, welches das Vorliegen oder die Abwesenheit der genannten Sequenz anzeigt,
ein Kerbfilter (8), welchem die genannten modulierten Signale zugeführt werden,
einen ersten Amplitudenrechner (3) in Reihe mit dem Kerbfilter (8), wobei ein Ausgang des ersten Amplitudenrechners mit einem ersten Eingang des Komparators (5) verbunden ist, und
einen zweiten Amplitudenrechner (4), dessen Eingang die von dem Modem empfangenen modulierten Signale (Rx) direkt zugeführt werden, und dessen Ausgang mit einem zweiten Eingang des Komparators (5) verbunden ist.

2. Vorrichtung zur Identifizierung einer vorgegebenen Signalsequenz, nach Anspruch 1, **dadurch gekennzeichnet, daß** jeweils zwischen jedem Ausgang eines Amplitudenrechrers (3,4) und dem Eingang des Komparators (5), welchem der Amplitudenrechner (3, 4) zugeordnet ist, ein Multiplikator (6, 7) angeordnet ist, welcher eine Multiplikation mit einem vorgegebenen Koeffizienten (Ko, K1) durchführt.

3. Vorrichtung zur Identifizierung einer vorgegebenen Signalsequenz, nach Anspruch 2, **dadurch gekennzeichnet, daß** der Koeffizient (Ko) des dem ersten Rechner (3) zugeordneten Multiplikators (6) größer als der Koeffizient (K1) des dem zweiten Rechner (4) zugeordneten Multiplikators (7) ist.

4. Vorrichtung zur Identifizierung einer vorgegebenen Signalsequenz, nach einem der Ansprüche 1 bis 3, **dadurch gekennzeichnet, daß** das Kerbfilter (8) ein nicht-rekursives digitales Filter mit zwei Grenzfrequenzen ist.

5. Vorrichtung zur Identifizierung einer vorgegebenen Signalsequenz, nach Anspruch 4, **dadurch gekennzeichnet, daß** das Kerbfilter (8) ein Filter vierter Ordnung mit zwei Nullstellen ist.

6. Vorrichtung zur Identifizierung einer vorgegebenen Signalsequenz, nach einem der Ansprüche 1 bis 5, **dadurch gekennzeichnet, daß** jeder Amplitudenrechner (3, 4) jeweils eine Schaltung zur Bestimmung des Absolutwerts der Amplitude des Empfangssignals (Rx) aufweist, sowie - als Mittelwertbildner - ein rekursives digitales Filter erster Ordnung mit Grenzfrequenz Null.

7. Vorrichtung zur Identifizierung einer vorgegebenen Signalsequenz, nach einem der Ansprüche 1 bis 6, **dadurch gekennzeichnet, daß** die Trägerfrequenz der modulierten Signale 1800 Hz ist und die Grenzfrequenzen des Kerbfilters (8) 1000 Hz bzw. 2600 Hz sind.
